# EUROPÄISCHE PATENTSCHRIFT

(11) **EP 1 451 051 B1**
(45) Veröffentlichungstag und Bekanntmachung des Hinweises auf die Patenterteilung: **10.08.2005**
(21) Anmeldenummer: 02785222.7
(22) Anmeldetag: 16.10.2002
(51) Int. Cl.: B60T 8/40, B60T 13/66

(54) **ELEKTROHYDRAULISCHES BREMSSYSTEM MIT EINEM PEDALWEGSIMULATOR ZUSAMMENGESETZT AUS EINEM FEDERSPEICHERDRUCKZYLINDER UND MECHANISCH GEKOPPELTEM SERVOKOLBEN**
ELECTROHYDRAULIC BRAKING SYSTEM WITH A PEDAL TRAVEL SIMULATOR CONSISTING OF A SPRING LOADED PRESSURE CYLINDER AND A MECHANICALLY COUPLED SERVO PISTON
SYSTEME DE FREINAGE ELECTRO-HYDRAULIQUE COMPORTANT UN SIMULATEUR DE COURSE DE PEDALE DE FREIN COMPOSE D'UN CYLINDRE DE FREIN A ACCUMULATEUR ET D'UN SERVOPISTON A COUPLAGE MECANIQUE

(30) Priorität: 05.12.2001 DE 10159789
(43) Veröffentlichungstag der Anmeldung: 01.09.2004
(73) Patentinhaber: DaimlerChrysler AG, 70567 Stuttgart (DE)
(72) Erfinder: NIEMANN, Ekkehard, 63454 Hanau (DE); BICKEL, Boris, 70329 Stuttgart (DE)
(86) Internationale Anmeldenummer: PCT/EP2002/011541
(87) Internationale Veröffentlichungsnummer: WO 2003/047935

(56) Entgegenhaltungen:
- WO-A-01/74636
- WO-A-95/29830
- WO-A-98/45151
- WO-A-99/29548
- WO-A-02/064409
- DE-A- 19 543 582
- DE-C- 4 102 497
- US-A- 4 425 005
- PATENT ABSTRACTS OF JAPAN vol. 016, no. 563 (M-1342), 4. Dezember 1992 (1992-12-04) -& JP 04 218458 A (TOYOTA MOTOR CORP), 10. August 1992 (1992-08-10)
- PATENT ABSTRACTS OF JAPAN vol. 1998, no. 14, 31. Dezember 1998 (1998-12-31) -& JP 10 250568 A (TOYOTA MOTOR CORP), 22. September 1998 (1998-09-22)
- PATENT ABSTRACTS OF JAPAN vol. 1998, no. 06, 30. April 1998 (1998-04-30) -& JP 10 044952 A (AISIN SEIKI CO LTD;TOYOTA MOTOR CORP), 17. Februar 1998 (1998-02-17)

## Beschreibung

Die Erfindung betrifft ein elektrohydraulisches Bremssystem nach dem Oberbegriff des Patentanspruches 1 und ein Verfahren zur Ansteuerung eines elektrohydraulischen Bremssystems nach dem Oberbegriff des Patentanspruches 7.

Ein derartiges elektrohydraulisches Bremssystem bzw. ein derartiges Verfahren zur Ansteuerung eines elektrohydraulischen Bremssystems sind aus der DE 41 02 497 C1 bekannt. Im Falle einer schnellen Bremspedalbetätigung wird der Bremsdruck in den Radbremseinrichtungen durch eine Pumpe hervorgerufen. Die beiden Kammern des Tandemhauptbremszylinders sind gegenüber den Radbremseinrichtungen abgesperrt und mit jeweils einem Pufferspeicher verbunden, so dass das noch Bremsflüssigkeit aus dem Tandemhauptbremszylinder in die Pufferspeicher verdrängt werden kann. Die Pufferspeicher dienen mithin als Pedalwegsimulator. Um ein unerwartetes "Durchfallen" des Bremspedals aufgrund der Verbindung des Tandemhauptbremszylinders mit den noch nicht gefüllten Pufferspeichern zu vermeiden, wenn erst im Verlauf eines Bremsvorgangs eine schnelle Bremspedalbetätigung erfolgt, kann in den Pufferspeichern ein Gegendruck erzeugt werden, der den Drücken in den Kammern des Tandemhauptbremszylinders nachgeführt wird.

Ein Elektrohydraulisches Bremssystem mit Pedalwegsimulator ist ferner in der WO 99/29548 ausführlich beschrieben. Der Pedalwegsimulator ist als Federspeicherzylinder ausgebildet und enthält eine Druckfeder mit nichtlinerarer Kraft-Weg-Charakteristik. Bei konventionellen Bremsanlagen für Personenkraftwagen wird die Bremskraft des Fahrers mittels Hebelübersetzung des Bremspedals mechanisch auf einen Unterdruck-Bremskraftverstärker und dann verstärkt weiter auf den Hauptbremszylinder übertragen. Mit dem erzeugten Druck wird die gewünschte Bremswirkung an den einzelnen Radbremsen erzielt. Bei einer elektrohydraulischen Bremse ist diese rein mechanischhydraulische Wirkungskette unterbrochen und durch Sensoren, ein Steuergerät und eine Druckversorgung ersetzt. Es besteht im Normalbetrieb keine mechanische oder hydraulische Verbindung zwischen dem Bremspedal und der Radbremse.

Eine elektrohydraulische Bremse besteht aus folgenden Komponenten:

Einer Betätigungseinheit aus Bremspedal und Pedalwegsimulator, einem Hydroaggregat, Sensoren (z.B. Wegsensoren, Drucksensoren, Raddrehzahlsensoren), Anbausteuergeräten oder Wegbausteuergeräten für das Hydroaggregat, einer Druckversorgung, Steuer- und Druckleitungen sowie Hydraulikventilen.

Die grundsätzliche Arbeitsweise einer elektrohydraulischen Bremse läßt sich wie folgt zusammenfassen:

Zwei unterschiedliche Sensoren- ein Sensor an der Betätigungseinheit für den Pedalweg und ein Drucksensor am Hydroaggregat - erfassen den Bremswunsch und übertragen ihn an das Steuergerät. In diesem Steuergerät sind auch die Funktionen Bremskraftverstärkung, Antiblockiersystem (ABS), Antriebsschlupfregelung (ASR) und Elektronisches Stabilitätsprogramm (ESP) mittels Software integriert. Die weiteren Sensoren von ABS,ASR und ESP liefern dem Steuergerät Daten über den Fahrzustand wie Geschwindigkeit oder Kurvenfahrt und über den Bewegungszustand der einzelnen Räder. Aus diesen Daten ermittelt die Software des Steuergerätes Signale für das Hydroaggregat, die in den Raddruckmodulatoren in die Bremsdrücke für die einzelnen Räder umgesetzt werden. Eine elektrisch angetriebene Hydraulikpumpe mit einem Hochdruckspeicher und Drucküberwachung bildet die Druckversorgung.

Im Normalbetrieb wirkt das Bremspedal auf den Hauptbremszylinder und den nachgeordneten Pedalwegsimulator. Mit dem Pedalwegsimulator wird mittels einer Druckfeder eine vorzugsweise nichtlineare Pedalkraft-Pedalweg-Kennlinie eingerichtet. Aus Sicherheitsgründen wird bei eventuellen Fehlern im System in einen Zustand geschaltet, bei dem das Fahrzeug auch ohne Bremskraftunterstützung abgebremst werden kann.

An diesem Punkt setzt die Erfindung an.

Bei bekannten elektrohydraulischen Bremssystemen werden im Fehlerfall die Komponenten des Hydraulikaggregates vom rein mechanisch-hydraulischen Hilfsbremskreis getrennt. Das Fahrzeug wird dann mit der Muskelkraft des Fahrers zum Stehen gebracht. Bremsflüssigkeit die sich eventuell im Federspeicherkolben des Pedalwegsimulators befindet, bleibt bei der Hilfsbremsung ungenutzt. Dieser Zustand tritt ein, wenn bei bekannten elektrohydraulischen Bremssystemen die elektrohydraulische Komponente während eines bereits eingeleiteten Bremsvorganges ausfällt und auf den Hilfsbremskreis umgeschaltet werden muß. In diesem Fall wurde nämlich das Bremspedal bereits noch im Normalbetrieb durchgedrückt und die Bremsflüssigkeit aus dem Hauptbremszylinder bereits zum großen Teil in den Pedalwegsimulator befördert. Die Bremsflüssigkeit im Pedalwegsimulator steht aber bei bekannten elektrohydraulischen Bremssystemen für die Hilfsbremsung nicht mehr zur Verfügung und es ist fraglich, ob die noch im Hauptbremszylinder befindliche Bremsflüssigkeit ausreicht, um eine Hilfsbremsung ausführen zu können. Selbst wenn die restlich im Hauptbremszylinder verbliebene Bremsflüssigkeit für eine Hilfsbremsung ausreicht, was in zeitgemäßen Fahrzeugen durch konstruktive Maßnahmen gesichert ist, so verlängert sich bei der Hilfsbremsung doch auf alle Fälle der Pedalweg, was zu ungünstigen ergonomischen Kräfteverhältnissen führen kann.

Ausgehend vom nächstkommenden Stand der Technik stellt sich die erfindungsgemäße Aufgabe, ein verbessertes elektrohydraulischen Bremssystem und ein verbessertes Verfahren zu dessen Ansteuerung anzugeben.

Erfindungsgemäß wird diese Aufgabe gelöst durch die Merkmale der unabhängigen Patentansprüche. Vorteilhafte Ausführungsformen sind in den Unteransprüchen enthalten.

Die Lösung gelingt durch eine Rückförderung der Bremsflüssigkeit aus dem Pedalwegsimulator in den Hilfsbremskreis. Hierzu wird ein Pedalwegsimulator als Federspeicherzylinder mit angekoppeltem und angesteuertem, hydraulischen Servokolben sowie mit verstärkter Druckfeder ausgebildet. Die Druckfeder fördert die im Pedalwegsimulator befindliche Bremsflüssigkeit zurück in den Hilfsbremskreis des Elektrohydraulischen Bremssystems. Die Druckfeder wird in ihrer Federkraft derart dimensioniert, dass im Pedalwegsimulator, wenn sich der Kolben des Pedalwegsimulators in seiner eingangsseitigen Endlage befindet, ein Mindestdruck herrscht, der ausreicht um im Hilfsbremskreis die nach StVZO (deutsche Straßenverkehrszulassungsordnung), EU Richtlinie 71/3210 EWG und ECE-Regelung 13 vorgeschriebenen Randbedingungen für die Hilfsbremsanlage einhalten zu können. Im Normalbetrieb des elektrohydraulischen Bremssystems wird die Pedalweg-Pedalkraft-Kennlinie des Pedalwegsimulators über die hydraulische Ansteuerung eines angekoppelten Hydraulikzylinders eingestellt.

Mit der Erfindung werden hauptsächlich die folgenden Vorteile erzielt:

Im Notfall, wenn die elektrohydraulische Komponente des Bremssystems ausfällt, wird mit der starken Druckfeder im Federspeicherzylinder des Pedalwegsimulators die im Pedalwegsimulator befindliche Bremsflüssigkeit in den Hilfsbremskreis zurückgefördert. Das Rückfördervolumen steht damit für die Hilfsbremsung zur Verfügung und verkürzt den Pedalweg für eine Hilfsbremsung. Ein Lösen des Bremspedals und damit eine Unterbrechung des Bremsmanövers, um eine Rückförderung von Bremsflüssigkeit aus dem Pedalwegsimulator in den Hilfsbremskreis zu ermöglichen und anschließend den Kolben des Pedalwegsimulators zu blockieren, ist mit der erfindungsgemäßen Volumenrückförderung nicht notwendig. Das Bremsmanöver kann ohne Unterbrechung zu Ende durchgeführt werden.

Im Hilfsbremskreis sind keinerlei elektrische Hilfsaggregate angeordnet. Damit bleibt der Hilfsbremskreis auch bei Ausfall des elektrischen Bordnetzes im Kraftfahrzeug voll betriebsfähig.

Die Druckfeder und der Pedalwegsimulator werden mindestens derart dimensioniert und die Druckfeder mindestens mit einer derartigen Kraft vorgespannt, dass zur Betätigung des Pedalwegsimulators und damit zum Zusammendrücken der Druckfeder der Bremsanlagen spezifische Mindestbremsdruck notwendig ist, mit dem bei der gesetzlich vorgeschriebenen, maximalen Pedalkraft, z.B. von zur Zeit 500 N, eine gesetzlich vorgeschriebene, mittlere Verzögerung, z.B. von zur Zeit 2,9 m/s² , mindestens erreicht wird.

Vorzugsweise wird die Druckfeder etwas stärker ausgelegt als für den Mindestbremsdruck unbedingt erforderlich. Vorzugsweise werden der Pedalwegsimulator und die Druckfeder derart dimensioniert und die Druckfeder mit einer derartigen Kraft vorgespannt, dass zur Betätigung des Pedalwegsimulators und damit zum Zusammendrücken der Druckfeder ein Druck notwendig ist, der größer ist als der Bremsanlagen spezifische Bremsdruck, bei dem die Räder bei maximalem Haftreibungskoeffizienten blockieren. Damit wird bei einer Hilfsbremsung sichergestellt, dass keine Bremsflüssigkeit vom Hilfsbremskreis in den Pedalwegsimulator gefördert wird, sondern stattdessen alle im Pedalwegsimulator befindliche Bremsflüssigkeit auch bei gedrücktem Bremspedal in den Hilfsbremskreis gefördert wird.

Die großen Federkräfte im Pedalwegsimulator haben zur Folge, dass der Pedalwegsimulator im Normalbetrieb der Bremsanlage mit der Unterstützung eines Servokolbens bedient werden muss. Deshalb ist der Federspeicherzylinder des Pedalwegsimulators mit einem Hydraulikzylinder gekoppelt, der über zwei Hydraulikventile, insbesondere zwei Proportionalventile, mit der Druckversorgung und mit dem Ausgleichsbehälter des Bremssystems hydraulisch verbunden ist. Die Hydraulikventile werden vom Steuergerät des Bremssystems entsprechend einer im Steuergerät abgelegten Pedalweg-Pedalkraft Kennlinie angesteuert.

Ausführungsbeispiele der Erfindung werden im Folgenden anhand einer Zeichnung dargestellt und näher erläutert. Es zeigt:

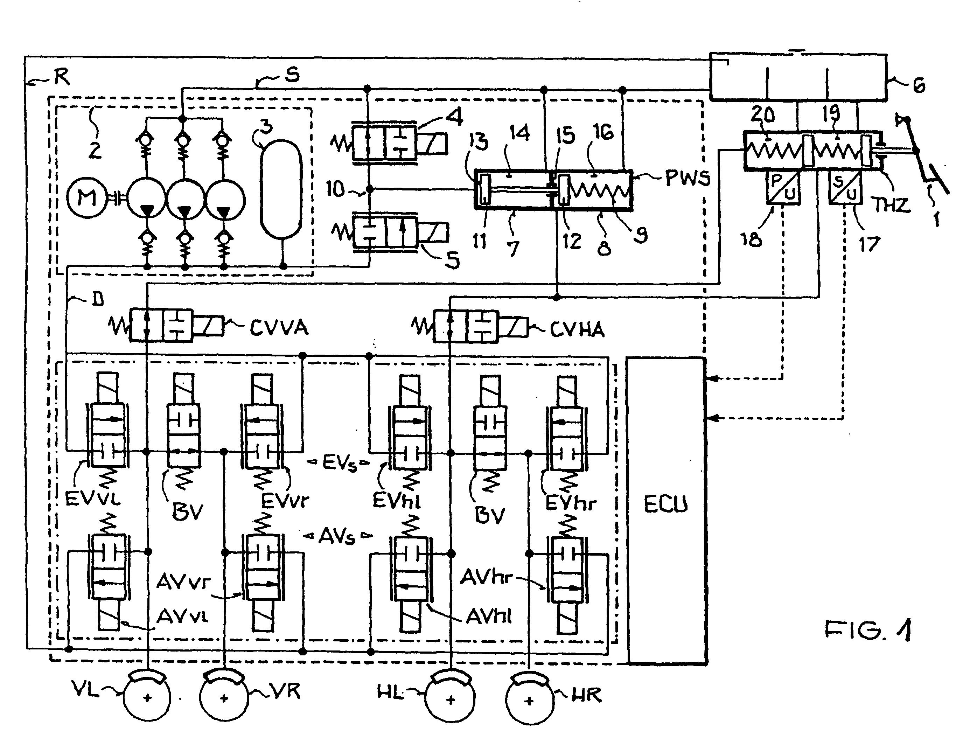

- Fig.1: ein Blockschaltbild eines elektrohydraulischen Bremssystems mit einem Pedalwegsimulator, der aus einem Federspeicherzylinder und einem Servo-Hydraulikzylinder zusammengesetzt ist.

Ein elektrohydraulisches Bremssystem nach Fig. 1 besteht typischerweise aus den für sich genommen bekannten Komponenten einer Druckversorgung 2, eines Steuergerätes ECU (für Electronic Control Unit), eines Hydroaggregates HCU (für Hydraulic Control Unit) und einer Betätigungseinheit, bestehend aus Bremspedal 1, Tandemhauptbremszylinder THZ und Pedalwegsimulator PWS.

Das Hydraulikaggregat HCU ist bei der Normalbremsung durch Trennventile CVVA (für Cut Valve Vorderachse) und CVHA (für Cut Valve Hinterachse) vom Tandemhauptbremszylinder getrennt. Typischer Weise enthält das Hydraulikaggregat mehrere 2/2 Hydraulikmagnetventile mit jeweils zwei Stellmöglichkeiten und zwei Hydraulikanschlüssen. Aus Sicherheitsgründen und entsprechend gesetzlicher Zulassungsbestimmungen müssen in einem Kraftfahrzeug mindestens zwei getrennte Bremskreise für die Betriebsbremse vorhanden sein. Im gezeigten vereinfachten Ausführungsbeispiel sind das die beiden Bremskreise für die Vorderachse und für die Hinterachse des Fahrzeugs. Der Bremskreis für die Vorderachse wird gebildet aus einem Einlassventil vorne links EVvl und einem Auslassventil vorne links AVvl und der Radbremse vorne links VL sowie einem Einlassventil vorne rechts EVvr, einem Auslassventil vorne rechts AVvr und der Radbremse vorne rechts VR. Ein Ausgleichventil BV (Balance Valve) zwischen den beiden Einlassventilen sorgt für einen Druckausgleich zwischen linker und rechter Radbremse. Dieselbe Anordnung an Magnetventilen findet sich im Hydraulikaggregat nochmals für die Hinterachse. Der Bremskreis für die Hinterachse besteht aus einem Einlassventil hinten links EVhl, einem Auslassventil hinten links AVhl und der Radbremse hinten links HL sowie einem Einlassventil Evhr hinten rechts, einem Auslassventil Avhr hinten rechts und der Radbremse hinten rechts HR. Zwischen linkem und rechtem Einlassventil ist auch wieder ein Ausgleichsventil BV für den Druckausgleich zwischen linker und rechter Fahrzeugseite geschaltet. Sämtliche Ventile sind als elektrisch betätigbare, ansteuerbare Magnetventile mit selbsttätiger Rückstellung ausgebildet und werden von dem Steuergerät ECU der Elektrohydraulischen Bremse angesteuert. Die Einlassventile und Auslassventile des Hydraulikaggregates sind als Proportionalventile ausgebildet, da sich mit Proportionalventilen der Bremsdruck in den Radbremsen besser einsteuern lässt. Die Ausgleichsventile, die sich jeweils zwischen linker Radbremse und rechter Radbremse befinden, erlauben je nach Bedarfslage der Fahrsituation entweder einen Druckausgleich zwischen linken und rechten Radbremsen oder bei ABS, ASR, ESP Anwendungen durch Trennung von linker und rechter Radbremse eine Einzelbremsung der Fahrzeugräder.

Die Druckversorgung 2 des Hydraulikaggregates besteht aus einer angetriebenen Hydraulikpumpe, z.B. einer Dreikolbenpumpe, die mit einer Saugleitung S mit dem Bremsflüssigkeitsvorratsbehälter 6 verbunden ist und deren Druckleitung D mit einem Druckspeicher 3 und dem Hydraulikaggregat verbunden ist. Von der Druckversorgung werden die Einlassventile des Hydraulikaggregates mit Bremsflüssigkeit und mit Bremsdruck versorgt. Die Auslassventile des Hydraulikaggregates bauen bei deren Öffnen den Bremsdruck wieder ab. Die Auslassventile sind deshalb über eine Rückleitung R mit dem Bremsflüssigkeitsvorratsbehälter 6 verbunden, in den die aus den Auslassventilen abfließende Bremsflüssigkeit zurückgefördert wird.

Bei einer Normalbremsung des elektrohydraulischen Bremssystems sind die beiden Bremskreise für Vorderachse und Hinterachse durch zwei Trennventile CVVA, CVHA vom Tandemhauptbremszylinder getrennt. Bei Betätigung des Bremspedals wird die Bremsflüssigkeit aus einer der Druckkammern des Tandemhauptbremszylinder in ein Pedalwegsimulator gefördert, der in der Regel als hydraulisch betätigbarer Federspeicherdruckzylinder ausgebildet ist. Der Fahrer verrichtet durch die Verdrängung der Bremsflüssigkeit aus dem Hauptbremszylinder in den Hydraulikzylinder des Pedalwegsimulators gegen die Federkraft des Pedalwegsimulators Arbeit. Über den Kolbenweg des Pedalwegsimulators und den vom Fahrer ausgeübten Druck wird der Bremswunsch des Fahrers mittels nicht dargestellter Wege- und Drucksensoren am Pedalwegsimulator und am Hraulikaggregat ermittelt und im Steuergerät mittels Software durch Ansteuerung des Hydraulikaggregates in ein Bremsmanöver umgesetzt.

Im Fehlerfall oder bei Ausfall des Bordnetzes im Kraftfahrzeug geht das Bremssystem in einen Zustand mit einem rein mechanisch-hydraulischen Hilfsbremskreis über. Hierzu trennen die Einlassventile des Hydroaggregates die Druckversorgung von den Bremsleitungen der Radbremsen und die beiden Trennventile CVVA, CVHA verbinden die beiden Druckkammern des Tandemhauptbremszylinders mit den beiden Bremskreisen des Kraftfahrzeuges. Hierdurch bleibt das Fahrzeug mit Muskelkraft durch Betätigung des Bremspedals 1 weiterhin, wenn auch ohne Hilfskraftunterstützung, bremsfähig.

Die Wirkungsweise und die Beschaltung der bisher beschriebenen, verschiedenen Ventile in den verschiedenen Betriebsmodi der Bremssteuerung ist hinlänglich aus bereits eingeführten mechanisch-hydraulischen Zweikreisbremssystemen, ABS, ASR und ESP Bremssystemen bekannt und braucht hier nicht im Detail erörtert zu werden. Sie sind der Vollständigkeit halber für die Anwendung der Erfindung und für das Verständnis der Erfindung nochmals in den Grundzügen kurz abgehandelt worden.

Die Erfindung liegt nun in der Ausbildung eines Pedalwegsimulators und Ankopplung eines Servo-Hydraulikzylinders 7 an einen mit verstärkter Druckfeder 9 ausgestatteten Federspeicherzylinder 8. Die Druckfeder wird hierbei derart stark ausgelegt und mit einer derartigen Kraft im Federspeicherzylinder vorgespannt, dass bei allen zu erwarteten Situationen bei Ausfall der elektrohydraulischen Bremskomponenten oder bei Ausfall des Bordnetzes immer sicher gestellt ist, dass zumindest ein Teil der sich eventuell im Pedalwegsimulator befindlichen Bremsflüssigkeit auch bei mit voller Muskelkraft betätigtem Bremspedal in den Hilfsbremskreis zurückgefördert wird. Auslegungsregeln für die Druckfeder wurden bereits im Zusammenhang mit den Vorteilen der Erfindung dargelegt. Aus den gesetzlichen Bestimmungen und aus den konstruktiven Gegebenheit der Bremsanlage kann der Fachmann für jede spezifische Bremsanlage die mindest erforderliche Vorspannung der Druckfeder, die zur erfindungsgemäßen Lösung notwendig ist, ermitteln. Bei der Vielzahl der möglichen konstruktiven Abmessungen der einzelnen Komponenten der Bremsanlage scheint es nicht sinnvoll hier auf konkrete Maße und Größen Bezug zu nehmen. Auch die gesetzlichen Vorschriften nehmen auf die Bemaßungen der Bremsanlagen keinen Bezug, ohne dass daraus für den Fachmann ein Mangel an Klarheit entstehen könnte. Der Hydraulikzylinder des Pedalwegsimulator ist mit seinem Servokolben 11 auf den Kolben 12 des Federspeicherzylinders gekoppelt. Vorzugsweise ist der Pedalwegsimulator mit einem einteiligen Gehäuse ausgebildet, das sowohl den Federspeicherzylinder als auch den Hydraulikzylinder umfasst. In dieser einstückigen Ausführungsform des Pedalwegsimulators sind der Servokolben 11 und der Kolben 12 des Federspeicherzylinders vorzugsweise über ein und dieselbe Kolbenstange gekoppelt. Federspeicherkolben und Servokolben bilden dann einen Doppelkolben.

In einer anderen Ausführungsform der Erfindung, die zeichnerisch nicht dargestellt ist, können der Servo-Hydraulikzylinder 7 und der Federspeicherzylinder 8 auch als getrennte Bauteile ausgeführt werden. Die Kopplung der beiden Kolben aus dem Hydraulikzylinder und aus dem Federspeicherzylinder muss dann nicht über eine einzige Kolbenstange erfolgen, sondern es können dann die beiden Kolbenstangen aus Hydraulikzylinder und Federspeicherzylinder vielmehr über ein an die Kolbenstangen angelenktes Gestänge oder über eine hydraulische Wirkverbindung miteinander verbunden sein.

In allen Ausführungsformen des Pedalwegsimulators bedarf es aufgrund der starken Druckfeder und der großen Vorspannkraft, mit der die Druckfeder im Federspeicherzylinder eingebaut ist, im Normalbetrieb des elektrohydraulischen Bremssystems der hydraulischen Unterstützung, um den Pedalwegsimulator zu betätigen. Deshalb ist der Servo-Hydraulikzylinder 7 über zwei Hydraulikventile 4,5 und natürlich über Hydraulikleitungen sowohl mit der Druckseite der Druckversorgung 2 als auch mit dem Bremsflüssigkeitsvorratbehälter 6 oder mit der Saugseite der Druckversorgung 2 oder mit der Rücklaufleitung des Hydraulikaggregates verbunden.

Hierzu wir die Druckleitung D der Druckversorgung mit zwei in Reihe geschalteten 2/2-Hydraulikventilen 4,5 mit der Saugleitung S der Druckversorgung oder (in Fig. 1 nicht dargestellt) mit der Rückleitung R zum Bremsflüssigkeitsvorratsbehälter verbunden. Das von der Druckseite her gesehen erste Ventil ist von seiner Funktion und Wirkung ein Druckbeaufschlagungventil 5 und das in Reihe folgende Ventil ist von seiner Funktion und Wirkung her ein Druckentlastungsventil 4. Druckbeaufschlagungsventil 5 und Druckentlastungsventil 4 sind jeweils selbstrückstellende Hydraulikventile. Das Druckentlastungsventil 4 und das Druckbeaufschlagungsventil 5 sind als elektrische Magnetventile ausgebildet, die vom Steuergerät ECU des Bremssystems angesteuert und geschaltet werden. Das Druckbeaufschlagungsventil 5 und das Druckentlastungventil 4 sind mit einer Hydraulikleitung verbunden, die ihrerseits über einen Dreiwegeabzweig 10 mit dem Servo-Hydraulikzylinder 7 des Pedalwegsimulators PWS verbunden ist. Der Servokolben 11 des Pedalwegsimulators teilt den Servo-Hydraulikzylinder in eine einlaufseitige Kammer 13 und in eine rücklaufseitige Kammer 14. Die einlaufseitige Kammer 13 steht über das Druckbeaufschlagungsventil 5 in hydraulischer Verbindung mit der Druckseite der Druckversorgung und wird bei Betätigung des Bremspedals 1 mit Druck beaufschlagt. Die rücklaufseitige Kammer 14 steht in permanenter Verbindung mit dem Bremsflüssigkeitsvorratbehälter 6.

Die einlaufseitige Druckkammer 15 des Federspeicherzylinders 8 steht in permanenter hydraulischer Verbindung mit einer der beiden Druckkammern des Tandemhauptbremszylinders. Die Federkammer 16 des Federspeicherzylinders 8 steht in permanenter hydraulischer Verbindung mit dem Bremsflüssigkeitsvorratsbehälter 6.

Das funktionale Zusammenwirken zwischen Hauptbremszylinder, Pedalwegsimulator, Druckversorgung und Druckbeaufschlagungsventil 5 sowie Druckentlastungsventil 4 ist wie folgt:

Im Normalbetrieb des Bremssystems sind die beiden Trennventile CVVA, CVHA in ihrer geschlossenen Stellung, so dass der Tandemhauptbremszylinder von dem Hydraulikaggregat getrennt ist.

Allerdings ist dadurch das Bremspedal 1 selbst nicht blockiert, da bei Betätigung des Bremspedals die Hydraulikflüssigkeit von dem vom Bremspedal betätigten Kolben mit Unterstützung durch den Servo-Hydraulikzylinder in den Pedalwegsimulator gedrückt wird. Die Stärke der Unterstützung durch den Servo-Hydraulikzylinder 7 wird durch die Beschaltung des Druckbeaufschlagungsventils 5 und des Druckentlastungsventils 4 eingestellt. Die Steuerung der Beschaltung erfolgt durch das Steuergerät ECU des Bremssystems mittels einer in dem Steuergerät abgelegten Pedalweg-Pedalkraft-Kennlinie.

Hierzu wird beispielsweise mit einem Wegsensor 17 der Kolbenweg im Tandemhauptbremszylinder gemessen und mit einem Drucksensor 18 an einer der Druckkammern des Tandemhauptbremszylinders der gewünschte Bremsdruck gemessen. Wegsensor und Drucksensor geben ihre Messwerte nach Wandlung der Messwerte in ein Spannungssignal U an das Steuergerät ECU. In dem Steuergerät werden die Messwerte für den gewünschten Bremsdruck von einer Software in Steuerbefehle für die Ventile des Hydraulikaggregates und damit für den an den Radbremsen anliegenden tatsächlichen Bremsdruck und erfindungsgemäß auch in Steuerbefehle für die Öffnung und Schließung des Druckbeaufschlagungsventils 5 und des Druckentlastungventils 4 umgesetzt. Der Kolbenweg im Tandemhauptbremszylinder ist hierbei ein Maß für den Pedalweg und der Druck in der Druckkammer des Tandemhauptbremszylinders ein Maß für die einzustellende Pedalkraft. Aus Pedalweg und Pedalkraft wird in dem Steuergerät der Bremswunsch des Fahrers ermittelt. Die von dem Steuergerät angesteuerten Ventile der Bremsanlage sind hierbei Aktoren. In dem Steuergerät selbst sind die Sensor-Aktor Zusammenhänge in Kennfeldern festgehalten, so dass zu jedem Sensordatensatz ein eindeutiger Aktordatensatz und damit eine eindeutige Ansteuerung des Bremssystems, respektive der Ventile des Bremssystems, abgelegt ist. Im Fall einer gewünschten nicht linearen Pedalweg-Pedalkraft Zusammenhangs besteht das Kennfeld zur Ansteuerung des Druckentlastungsventils aus einer nicht linearen Kennlinie, bei der der Bremsdruck überproportional, am besten progressiv mit dem Pedalweg steigt. Dies wird erreicht, indem mit zunehmendem Pedalweg der Schließgrad des Druckentlastungsventils 4 überproportional, am besten progressiv zunimmt. Zu Beginn der Bremsung hingegen, also bei noch kleinem anfänglichen Pedalweg ist das Druckentlastungsventil geschlossen oder zumindest nahezu geschlossen, während das Druckbeaufschlagungsventil 5 seinen größten Öffnungsgrad hat, damit zu Beginn der Bremspedalbetätigung eine maximale Servounterstützung zum Zusammendrücken der sehr starken Druckfeder im Federspeicherzylinder des Pedalwegsimulators vorhanden ist. Mit zunehmendem Pedalweg wird der Öffnungsgrad des Druckbeaufschlagungsventils überproportional am besten progressiv mit zunehmendem Pedalweg verringert. Solche Kennlinien lassen sich regelungstechnisch am besten mit Proportionalventilen nachfahren. Zweckmäßiger Weise sind daher das Druckentlastungsventil 4 und das Druckbeaufschlagungsventil 5 als Proportionalventile ausgebildet.

In einer einfacheren, weniger bevorzugten Ausführungsform kann das Druckentlastungsventil auch als Schaltventil ausgebildet sein. In diesem Fall müsste die nichtlineare Pedalweg-Pedalkraft-Kennlinie mittels Takten, d.h. schnelles, zeitgesteuertes Öffnen und Schließen des Schaltventils nachgefahren werden. Ähnlich einer Pulsweitensteuerung müssten dann mit zunehmendem Pedalweg die Zeitintervalle, in denen das Druckentlastungsventil geschlossen ist, überproportional, am besten progressiv mit größer werdendem Pedalweg zunehmen. Dies hätte allerdings unter Umständen ein leichtes Vibrieren des Bremspedals zur Folge, dass von einem Fahrer eines Kraftfahrzeuges als unangenehm empfunden werden könnte.

Der zweite, hauptsächliche Vorteil der Erfindung ergibt sich im Fehlerfall des elektrohydraulischen Bremssystems. Im Fehlerfall werden alle vier Einlassventile des Hydraulikaggregates für die vier Radbremsen von dem Steuergerät in ihren geschlossenen Zustand geschaltet. Falls das Steuergerät ausfällt, gehen die Einlassventile bei Spannungsausfall am Antrieb der Ventile konstruktionsbedingt, selbsttätig in den geschlossen Zustand. Durch die federkraftbedingte Rückstellung der Ventile wird der geschlossene Zustand bei Spannungsausfall selbsttätig eingenommen. Durch Schließen aller Einlassventile wird die Druckversorgung 2 von den Bremskreisen abgekoppelt. Gleichzeitig öffnen die Trennventile CVVA, CVHA mit denen bei einer Normalbremsung das Hydraulikaggregat vom Tandemhauptbremszylinder abgekoppelt ist. Die Trennventile gehen konstruktionsbedingt bei fehlender Ansteuerung oder bei Spannungsausfall am Stellglied der Trennventile in die offene Stellung. Durch die federkraftbedingte Rückstellung der Trennventile wird die offene Stellung bei Spannungsausfall selbsttätig eingenommen. Ebenfalls zeitgleich mit der Rückstellung der Trennventile und der Einlassventile wird das Druckentlastungsventil 4 zur Beschaltung des Pedalwegsimulators vollständig geöffnet und das Druckbeaufschlagungsventil 5 vollständig geschlossen. Auch diese beiden Ventile sind so konstruiert, dass durch Federkraftrückstellung bei Ausfall der Ansteuerung oder bei Ausfall der Spannungsversorgung die eben genannten, spannunglosen Rückfallpositionen selbsttätig eingenommen wird. Durch diese Änderungen der Ventilstellungen befindet sich das elektrohydraulische Bremssystem nun in der Rückfallebene bzw. im Hilfsbremsmodus. Die Ventilstellungen haben den Hilfsbremskreis aktiviert.

Beim Hilfsbremskreis ist nun im Beispiel der Fig. 1 die primäre Druckkammer 19 des Tandemhauptzylinders mit einer Hydraulikleitung über das geöffnete Trennventil CVHA für den Hinterachsbremskreis mit den Radbremsen des Hinterachsbremskreises verbunden. Die sekundäre, zweite Druckkammer 20 des Tandemhauptbremszylinders ist nun mit einer Hydraulikleitung über das geöffnete Trennventil CVVA für den Vorderachsbremskreis mit den Radbremsen des Vorderachsbremskreises verbunden. Im Hilfsbremsmodus ist durch Öffnen des Druckentlastungsventils 4 und durch Schließen des Druckbeaufschlagungsventils 5 eine Servounterstützung des Pedalwegsimulators nicht mehr gegeben. Durch Öffnen des Druckentlastungsventils 4 kann die Druckfeder 9 im Federspeicherzylinder den Servokolben 11 und den Kolben 12 des Federspeicherzylinders jeweils in die eingangsseitige Endlage drücken. Hierdurch wird Bremsflüssigkeit, die sich eventuell in der eingangseitigen Druckkammer 15 des Federspeicherzylinders befunden hat, in den Hilfsbremskreis für die Hinterachse gedrückt. Die Vorspannung der Druckfeder im Federspeicherzylinder des Pedalwegsimulators ist hierbei so groß, dass die Druckfeder in der Druckkammer 15 mindestens denjenigen Druck aufbringen kann, der notwendig ist, um die nach StVZO (deutsche Straßenverkehrszulassungsordnung) festgelegten Mindestverzögerungen zu erreichen. Vorzugsweise ist die Vorspannung der Druckfeder 9 so groß, dass die Druckfeder in der Druckkammer 15 mindestens denjenigen Druck aufbringen kann, der notwendig ist, um eine Blockieren der Radbremsen bei maximalem Haftreibungskoeffizienten der Räder auf der Fahrbahn zu erzielen.

Bei Betätigung des Bremspedals kann deshalb im Falle einer Hilfsbremsung keine Bremsflüssigkeit mehr in den Pedalwegsimulator fließen. Der vom Fahrer mittels Pedaldruck aufgebrachte Bremsdruck wird von der ersten, primären Druckkammer des Tandemhauptbremszylinders mittels Hydraulikleitungen auf die Radbremsen der Hinterachse übertragen. Gleichzeitig wird bei Betätigung des Bremspedals der Sekundärkolben des Tandemhauptbremszylinders betätigt und der Bremsdruck in der sekundären Druckkammer mittels Hydraulikleitungen auf die Radbremsen der Vorderachse übertragen.

Dies bewirkt zweierlei Vorteile des erfindungsgemäßen elektrohydraulischen Bremssystems:
- Bei nicht betätigtem Bremspedal wird Bremsflüssigkeit, die vom Tandemhauptbremszylinder in den Pedalwegsimulator gefördert worden war, durch die starke Vorspannung der Druckfeder des Pedalwegsimulators wieder zurück in den Hilfsbremskreis befördert. Es ergibt sich eine Volumenrückförderung der im Pedalwegsimulator befindlichen Bremsflüssigkeit entweder in den Tandemhauptbremszylinder und den Bremsflüssigkeitsvorratsbehälter oder in die Bremszylinder der Radbremsen des angeschlossenen Hilfsbremskreises. In dem Ausführungsbeispiel der Fig. 1 ist der Hilfsbremskreis für die Hinterräder an den Pedalwegsimulator angeschlossen. Natürlich könnte auch der Hilfsbremskreis für die Vorderräder oder eine andere nach den Zulassungsbestimmungen für Kraftfahrzeuge zulässige Kombination aus Vorderrädern und Hinterrädern als Hilfsbremskreis an den Pedalwegsimulator angeschlossen sein.
- Sollte das elektrohydraulische Bremssystem bei betätigtem und gedrücktem Bremspedal ausfallen, wird das Bremsflüssigkeitsvolumen das aus dem Tandemhauptbremszylinder in den Pedalwegsimulator gefördert wurde, wo es für eine Hilfsbremsung verloren wäre, durch die erfinderische Maßnahme der Volumenrückförderung wieder in den Hilfsbremskreis zurückgefördert und zwar bei betätigtem Bremspedal, ohne dass der Bremsvorgang unterbrochen wird. Bei vorbekannten elektrohydraulischen Bremssystemen muss in diesem Fall das Bremspedal gelöst werden, damit Bremsflüssigkeit vom Pedalwegsimulator in den Hilfsbremskreis zurückfließen kann. In einer Gefahrensituation wird daher bei Hilfsbremsungen mit vorbekannten elektrohydraulischen Bremssystemen unter Umständen wertvoller Bremsweg ungenutzt verschenkt. Die Erfindung verkürzt in dem zuvor geschilderten Fall der Hilfsbremsung den Bremsweg beträchtlich und erhöht damit die Sicherheit für alle Verkehrsbeteiligten.

## Patentansprüche

1. Elektrohydraulisches Bremssystem mit einem Hydraulikaggregat (HCU) für mindestens zwei Bremskreise, mindestens zwei Trennventilen (CVVA,CVHA), einem elektronischen Steuergerät (ECU), einer Druckversorgung (2) oder zumindest einem Druckspeicher (3), mehreren Sensoren (17,18) zur Ermittlung eines Bremswunsches und mit einer Betätigungseinheit aus einem Bremspedal (1), einem Tandemhauptbremszylinder (THZ) und einem Pedalwegsimulator (PWS), der aus einem Federspeicherzylinder (8) mit angekoppeltem Servo-Hydraulikzylinder (7) besteht, wobei der Servo-Hydraulikzylinder über ein Druckbeaufschlagungsventil (5) mit der Druckseite (D) der Druckversorgung (2) oder des Druckspeichers (3) und über ein Druckentlastungsventil (4) mit der Saugseite der Druckversorgung oder mit dem Bremsflüssigkeitsvorratsbehälter (6) oder mit der Rückleitung (R) des Hydraulikaggregates (HCU) hydraulisch verbunden ist,
**dadurch gekennzeichnet,**
**dass** das Druckbeaufschlagungsventil (5) und das Druckentlastungsventil (4) im normalen Betriebszustand des Bremssystems vom Steuergerät (ECU) zur Einstellung einer im Steuergerät (ECU) abgelegten Pedalweg-Pedalkraft-Kennlinie betätigt werden.

2. Elektrohydraulisches Bremssystem nach Anspruch 1, bei dem der Pedalwegsimulator (PWS) ein einteiliges Gehäuse aufweist, das sowohl den Federspeicherzylinder (8) als auch den Servo-Hydraulikzylinder (7) umfasst.

3. Elektrohydraulisches Bremssystem nach Anspruch 1, bei dem der Federspeicherzylinder (8) und der Servo-Hydraulikzylinder (7) als getrennte Bauteile ausgebildet sind.

4. Elektrohydraulisches Bremssystem nach einem der Ansprüche 1 bis 3, bei dem eine Druckfeder (9) im Federspeicherzylinder mindestens derart dimensioniert und die Druckfeder (9) mindestens mit einer derartigen Kraft vorgespannt ist, dass zur Betätigung des Pedalwegsimulators (PWS) und damit zum Zusammendrücken der Druckfeder (9) der Bremsanlagen spezifische Mindestbremsdruck notwendig ist, mit dem bei einer gesetzlich vorgeschriebenen, maximalen Pedalkraft, von insbesondere 500 N, eine gesetzlich vorgeschriebene, mittlere Verzögerung, von insbesondere 2,9 m/s² , mindestens erreicht wird.

5. Elektrohydraulisches Bremssystem nach einem der Ansprüche 1 bis 3, bei dem eine Druckfeder (9) im Federspeicherzylinder derart dimensioniert und die Druckfeder (9) mit einer derartigen Kraft vorgespannt ist, dass zur Betätigung des Pedalwegsimulators (PWS) und damit zum Zusammendrücken der Druckfeder (9) ein hydraulischer Druck notwendig ist, der größer ist als der Bremsanlagen spezifische Bremsdruck, bei dem die Räder bei maximalem Haftreibungskoeffizienten blockieren.

6. Elektrohydraulisches Bremssystem nach einem der Ansprüche 1 bis 5, bei dem die Pedalweg-Pedalkraft-Kennlinie einen linearen oder nichtlinearen, insbesondere einen progressiven, Weg-Kraft-Verlauf hat.

7. Verfahren zur Ansteuerung eines elektrohydraulischen Bremssystems mit einem Hydraulikaggregat (HCU) für mindestens zwei Bremskreise, mindestens zwei Trennventilen (CVVA, CVHA), einem elektronischen Steuergerät (ECU), einer Druckversorgung (2) oder zumindest einem Druckspeicher (3), mehreren Sensoren (17,18) zur Ermittlung eines Bremswunsches und mit einer Betätigungseinheit aus einem Bremspedal (1), einem Tandemhauptbremszylinder (THZ) und einem Pedalwegsimulator (PWS), der aus einem Federspeicherzylinder (8) mit angekoppeltem Servo-Hydraulikzylinder (7) besteht, wobei der Servo-Hydraulikzylinder über ein Druckbeaufschlagungsventil (5) mit der Druckseite (D) der Druckversorgung (2) oder des Druckspeichers (3) und über ein Druckentlastungsventil (4) mit der Saugseite der Druckversorgung oder mit dem Bremsflüssigkeitsvorratsbehälter (6) oder mit der Rückleitung (R) des Hydraulikaggregates (HCU) hydraulisch verbunden ist,
**dadurch gekennzeichnet,**
- **dass** das Druckbeaufschlagungsventil (5) und das Druckentlastungsventil (4) im normalen Betriebszustand des Bremssystems von dem Steuergerät (ECU) zur Einstellung einer im Steuergerät (ECU) abgelegten Pedalweg-Pedalkraft-Kennlinie betätigt werden,
- und **dass** im Fehlerfall des Bremssystems das Druckbeaufschlagungsventil (5) und das Druckentlastungsventil (4) in ihre jeweiligen Rückfallpositionen fallen und die Druckfeder (9) des Pedalwegsimulator (PWS) den Kolben (12) des Federspeicherzylinders (8) in seine eingangsseitige Endlage drückt.

8. Verfahren nach Anspruch 7, **dadurch gekennzeichnet, dass** das Druckbeaufschlagungsventil (5) vom Steuergerät (ECU) mit einer linearen oder nichtlinearen, Pedalweg-Pedalkraft-Kennlinie angesteuert wird.

9. Verfahren nach Anspruch 7 oder 8, **dadurch gekennzeichnet, dass** das Druckentlastungsventil (4) vom Steuergerät (ECU) mit einer linearen oder nichtlinearen Pedalweg-Pedalkraft-Kennlinie angesteuert wird.

10. Verfahren nach Anspruch 8 oder 9, **dadurch gekennzeichnet, dass** die Pedalweg-Pedalkraft-Kennlinie nicht linear ist und dass die nicht lineare Pedalweg-Pedalkraft-Kennlinie mit zunehmendem Pedalweg überproportional oder progressiv steigt.

11. Verfahren nach einem der Ansprüche 8 bis 10, **dadurch gekennzeichnet, dass** im Fehlerfall einer Komponente des elektrohydraulischen Bremssystems oder bei Ausfall des Steuergerätes das elektrohydraulische Bremssystem in einen Hilfsbremsmodus umgeschaltet wird und im Pedalwegsimulator (PWS) befindliche Bremsflüssigkeit in den Hilfsbremskreis gefördert wird.

## Claims

1. Electro-hydraulic brake system with a hydraulic aggregate (HCU) for at least two brake circuits, at least two cutoff valves (CVVA, CVHA), an electronic control unit (ECU), a pressure supply (2) or at lest a pressure reservoir (3), several sensors (17, 18) for determining a wish to brake, and with an actuation unit comprising a brake pedal (1), a tandem main brake cylinder (THZ) and a pedal path simulator (PWS), the latter consisting of a spring-loaded cylinder (8) with a servo-hydraulic cylinder (7) coupled thereto, such that the servo-hydraulic cylinder is hydraulically connected via a pressurising valve (5) to the pressure side (D) of the pressure supply (2) or of the pressure reservoir (3) and via a pressure release valve (4) to the suction side of the pressure supply or to the brake fluid reservoir (6) or to the return line (R) of the hydraulic aggregate (HCU),
**characterised in that**
in the normal operating condition of the brake system, the pressurising valve (5) and the pressure release valve (4) are actuated by the control unit (ECU) in accordance with a pedal path-pedal force characteristic which is stored in the control unit (ECU).

2. Electro-hydraulic brake system according to Claim 1, in which the pedal path simulator (PWS) has a one-piece housing, which includes both the spring-loaded cylinder (8) and the servo-hydraulic cylinder (7).

3. Electro-hydraulic brake system according to Claim 1, in which the spring-loaded cylinder (8) and the servo-hydraulic cylinder (7) are made as separate components.

4. Electro-hydraulic brake system according to any of Claims 1 to 3, in which a compression spring (9) in the spring-loaded cylinder is of a size, and the said compression spring (9) is pre-stressed at least with a force, such that to actuate the pedal path simulator (PWS) and thus also to compress the compression spring (9), a brake-system-specific minimum brake pressure is needed, with which, at a maximum pedal force prescribed by law, in particular 500 N, at least a legally prescribed average deceleration, in particular of 2.9 m/s², is achieved.

5. Electro-hydraulic brake system according to any of Claims 1 to 3, in which a compression spring (9) is of a size, and the said compression spring (9) is pre-stressed with a force, such that to actuate the pedal path simulator (PWS) and thus also to compress the compression spring (9), a hydraulic pressure is needed which is larger than the brake-system-specific brake pressure at which the wheels are blocked at the maximum static friction coefficient.

6. Electro-hydraulic brake system according to any of Claims 1 to 5, in which the pedal path - pedal force characteristic follows a linear or non-linear, in particular a progressive path-force course.

7. Method for the control of an electro-hydraulic brake system with a hydraulic aggregate (HCU) for at least two brake circuits, at least two cutoff valves (CVVA, CVHA), an electronic control unit (ECU), a pressure supply (2) or at least a pressure reservoir (3), several sensors (17, 18) for determining a wish to brake, and with an actuation unit comprising a brake pedal (1), a tandem main brake cylinder (THZ) and a pedal path simulator (PWS), the latter consisting of a spring-loaded cylinder (8) with a servo-hydraulic cylinder (7) coupled thereto, such that the servo-hydraulic cylinder is hydraulically connected via a pressurising valve (5) to the pressure side (D) of the pressure supply (2) or of the pressure reservoir (3) and via a pressure release valve (4) to the suction side of the pressure supply or to the brake fluid reservoir (6) or to the return line (R) of the hydraulic aggregate (HCU),
**characterised in that**
- in the normal operating condition of the brake system, the pressurising valve (5) and the pressure release valve (4) are actuated by the control unit (ECU) in accordance with a pedal path-pedal force characteristic which is stored in the control unit (ECU),
- and if the brake system develops a fault, the pressurising valve (5) and the pressure release valve (4) return to their respective fall-back positions and the compression spring (9) of the pedal path simulator (PWS) pushes the piston (12) of the spring-loaded cylinder (8) to its end position on the inlet side.

8. Method according to Claim 7, **characterised in that** the pressurising valve (5) is controlled by the control unit (ECU) in accordance with a linear or non-linear pedal path - pedal force characteristic.

9. Method according to Claims 7 or 8, **characterised in that** the pressure released valve (4) is controlled by the control unit (ECU) in accordance with a linear or non-linear pedal path-pedal force characteristic.

10. Method according to Claims 8 or 9, **characterised in that** the pedal path-pedal force characteristic is non-linear and the said non-linear pedal path-pedal force characteristic increases over-proportionally or progressively with increasing pedal path.

11. Method according to any of Claims 8 to 10, **characterised in that** in the event of a defect in a component of the electro-hydraulic brake system or if the control unit should fail, the electro-hydraulic brake system changes over to an auxiliary brake mode and any brake fluid present in the pedal path simulator (PWS) is returned back into the auxiliary brake circuit.

## Revendications

1. Système de freinage électro-hydraulique comprenant un groupe de puissance hydraulique (HCU) pour au moins deux circuits de freinage, au moins deux soupapes de séparation (CVVA, CVHA), un appareil de commande électronique (ECU), une alimentation en pression (2) ou au moins un accumulateur de pression (3), plusieurs capteurs (17, 18) destinés à détecter un freinage souhaité et comprenant une unité d'actionnement constituée d'une pédale de frein (1), d'un maître-cylindre tandem (THZ) et d'un simulateur de course de pédale de frein (PWS), qui est constitué d'un cylindre de frein à accumulateur (8) comprenant un cylindre servo-hydraulique (7) couplé, le cylindre servo-hydraulique étant relié de façon hydraulique via une soupape de mise sous pression (5) au côté de pression (D) de l'alimentation en pression (2) ou de l'accumulateur de pression (3) et via une soupape de décompression (4) au côté d'aspiration de l'alimentation en pression ou au réservoir de stockage de liquide de freins (6) ou à la conduite de retour (R) du groupe de puissance hydraulique (HCU), **caractérisé en ce que** la soupape de mise sous pression (5) et la soupape de décompression (4) sont actionnées au cours d'un état de fonctionnement normal du système de freinage par l'appareil de commande (ECU) pour établir une courbe caractéristique de la course de pédale et de la force de pédale stockée en mémoire dans l'appareil de commande (ECU).

2. Système de freinage électro-hydraulique selon la revendication 1, dans lequel le simulateur de course de pédale de frein (PWS) comprend un boîtier en une seule pièce qui comporte aussi bien le cylindre de frein à accumulateur (8) que le cylindre servo-hydraulique (7) .

3. Système de freinage électro-hydraulique selon la revendication 1, dans lequel le cylindre de frein à accumulateur (8) et le cylindre servo-hydraulique (7) sont conçus comme des composants séparés.

4. Système de freinage électro-hydraulique selon l'une quelconque des revendications 1 à 3, dans lequel un ressort de pression (9) dans le cylindre de frein à accumulateur est au moins dimensionné de telle sorte et le ressort de pression (9) est au moins précontraint avec une telle force que pour actionner le simulateur de course de pédale de frein (PWS) et de ce fait pour comprimer le ressort de pression (9) des dispositifs de freinage, une pression de freinage minimale spécifique est nécessaire, avec laquelle, dans le cas d'une force de pédale maximale prescrite, notamment de 500 N, on obtient une décélération moyenne prescrite, notamment de 2,9 m/s².

5. Système de freinage électro-hydraulique selon l'une quelconque des revendications 1 à 3, dans lequel un ressort de pression (9) dans le cylindre de frein à accumulateur est dimensionné de telle sorte et le ressort de pression (9) est précontraint avec une telle force que pour actionner le simulateur de course de pédale de frein (PWS) et de ce fait pour comprimer le ressort de pression (9), une pression hydraulique est nécessaire, qui est supérieure à la pression de freinage spécifique aux dispositifs de freinage, à l'occasion de laquelle les roues se bloquent lorsque le coefficient d'adhérence est maximal.

6. Système de freinage électro-hydraulique selon l'une quelconque des revendications 1 à 5, dans lequel la courbe caractéristique de la course de pédale et de la force de pédale présente un tracé course-force linéaire ou non linéaire, notamment progressif.

7. Procédé de commande d'un système de freinage électro-hydraulique comprenant un groupe de puissance hydraulique (HCU) pour au moins deux circuits de freinage, au moins deux soupapes de séparation (CVVA, CVHA), un appareil de commande électronique (ECU), une alimentation en pression (2) ou au moins un accumulateur de pression (3), plusieurs capteurs (17, 18) destinés à détecter un freinage souhaité et comprenant une unité d'actionnement composée d'une pédale de frein (1), d'un maître-cylindre tandem (THZ) et d'un simulateur de course de pédale de frein (PWS), qui est constitué d'un cylindre de frein à accumulateur (8) comprenant un cylindre servo-hydraulique (7) couplé, le cylindre servo-hydraulique étant relié de façon hydraulique via une soupape de mise sous pression (5) au côté de pression (D) de l'alimentation en pression (2) ou de l'accumulateur de pression (3) et via une soupape de décompression (4) au côté d'aspiration de l'alimentation en pression ou au réservoir de stockage du liquide de freins (6) ou à la conduite de retour (R) du groupe de puissance hydraulique (HCU),
**caractérisé en ce que**
◆ la soupape de mise sous pression (5) et la soupape de décompression (4) sont actionnées au cours d'un état de fonctionnement normal du système de freinage par l'appareil de commande (ECU) pour établir une courbe caractéristique de la course de pédale et de la force de pédale stockée en mémoire dans l'appareil de commande (ECU),
◆ et **en ce que**, en cas de défaillance du système de freinage, la soupape de mise sous pression (5) et la soupape de décompression (4) retombent dans leurs positions de recul respectives et le ressort de pression (9) du simulateur de course de pédale de frein (PWS) presse le piston (12) du cylindre de frein à accumulateur (8) dans sa position finale côté entrée.

8. Procédé selon la revendication 7, **caractérisé en ce que** la soupape de mise sous pression (5) est commandée par l'appareil de commande (ECU) avec une courbe caractéristique de la course de pédale et de la force de pédale linéaire ou non linéaire.

9. Procédé selon la revendication 7 ou 8, **caractérisé en ce que** la soupape de décompression (4) est commandée par l'appareil de commande (ECU) avec une courbe caractéristique de la course de pédale et de la force de pédale linéaire ou non linéaire.

10. Procédé selon la revendication 8 ou 9, **caractérisé en ce que** la courbe caractéristique de la course de pédale et de la force de pédale n'est pas linéaire et **en ce que** la courbe caractéristique de force de pédale non linéaire croît de façon surproportionnelle ou progressive à mesure que la course de pédale augmente.

11. Procédé selon l'une quelconque des revendications 8 à 10, **caractérisé en ce que**, dans le cas d'une défaillance d'un composant du système de freinage électro-hydraulique ou dans le cas d'une panne de l'appareil de commande, le système de freinage électro-hydraulique est commuté en mode de freinage auxiliaire et le liquide de freins situé dans le simulateur de course de pédale de frein (PWS) est acheminé dans le circuit de freinage auxiliaire.
